# EUROPEAN PATENT APPLICATION

(11) **EP 3 147 202 A1**
(43) Date of publication of application: **29.03.2017**
(21) Application number: 16190612.8
(22) Date of filing: 26.09.2016
(51) Int. Cl.: B64C 1/06, B64C 1/08, B64C 1/12, B64C 3/18, B64C 3/22, B64C 3/26, B64C 9/02, B64C 13/38, F16S 3/08, F16S 5/00, B33Y 80/00

(54) **STRUCTURAL CONNECTOR**

(30) Priority: 28.09.2015 GB 201517126
(71) Applicant: Airbus Operations Limited, Bristol BS34 7PA (GB)
(72) Inventor: EALES, Jonathan, Bristol, Avon BS34 7PA (GB)
(74) Representative: EIP

(57) **Abstract**

Disclosed is an assembly (400) comprising first and second components (402, 404) and a structural connector (100, 200, 300). The structural connector (100, 200, 300) comprises a first connection element (102, 202, 302) and a second connection element (104, 204, 304) interlinked with the first connection element (102, 202, 302). Each of the first and second connection elements is attached to each of the first and second components (402, 404).

## Description

### TECHNICAL FIELD

The present invention relates to structural connectors, to assemblies comprising such structural connectors, and to methods of manufacturing such assemblies.

### BACKGROUND

In many structural design applications, such as aircraft design, it is common to use load bearing structural connectors to connect one component to another. For example, in aircraft wing design, spars, ribs and stringers may form the main load-bearing structural components of the wing, with upper and lower wing covers forming an outer skin surface.

In conventional wing structures, joints or structural connectors may be cast or machined and may be bolted, welded or bonded to the components which they are intended to connect together.

In critical applications, designers may specify multiple load bearing structural connectors to provide redundancy in the event that one or more of the connectors fails or is removed. However, providing this redundancy requires significant expense in manufacturing and fixing the connectors in place and may add significant weight to the structure. Furthermore, providing redundancy uses space that may otherwise be occupied by other components and/or services such as wiring or fluid supply lines.

### SUMMARY

A first aspect of the present invention provides an assembly comprising first and second components and a structural connector, the structural connector comprising a first connection element and a second connection element interlinked with the first connection element, wherein each of the first and second connection elements is attached to each of the first and second components.

Optionally, the first connection portion of the first connection element occupies a first surface area of the first component and the first connection portion of the second connection element occupies a second surface area of the first component, the second surface area being less than the first surface area.

Optionally, the second connection portion of the first connection element occupies a third surface area of the second component and the second connection portion of the second connection element occupies a fourth surface area of the second component, the third surface area being less than the fourth surface area.

Optionally, the first surface area is substantially equal to the fourth surface area.

Optionally, the second surface area is substantially equal to the third surface area.

Optionally, the second surface area is at least partially within the first surface area.

Optionally, the third surface area is at least partially within the fourth surface area.

Optionally, one or both of the first and second connection elements are attached to one or both of the first and second components by a fastening. The fastening may include one or more of a bolt, a rivet, an adhesive and a weld.

Optionally, the second component is supported by the first component via the first and second connection elements, such that the first connection element provides a load path redundancy for the second connection element.

Optionally, the first and second components are components of a vehicle.

Optionally, the first and second components are components of an aircraft.

Optionally, the first and second components are components of an aircraft wing.

Optionally, the first component is a wing component and the second component is a wiring harness.

Optionally, the first component is a hinge rib and the second component is an actuator.

Optionally, the first component is a portion of the wing spar or wing rib and the second component is a hinge associated with a control surface of the aircraft.

Optionally, the first component is orientated parallel to the second component.

Optionally, the assembly comprises a third component and third and fourth interlinked connection elements, wherein each of the third and fourth connection elements is attached to each of the second and third components.

A second aspect of the present invention provides vehicle comprising the assembly according to the first aspect of the present invention.

A third aspect of the present invention provides an aircraft comprising the assembly according to the first aspect of the present invention.

A fourth aspect of the present invention provides an aircraft wing comprising an assembly according to the first aspect of the present invention.

A fifth aspect of the present invention provides the structural connector of the assembly according to the first aspect of the present invention, wherein each of the first and second connection elements is attachable to each of the first and second components.

A sixth aspect of the present invention provides a structural connector for connecting first and second components, the structural connector comprising a first connection element and a second connection element interlinked with the first connection element, wherein each of the first and second connection elements is attachable to each of the first and second components.

Optionally, each of the first and second connection elements comprises a first connection portion and a second connection portion, wherein each of the first connection portion of the first connection element and the first connection portion of the second connection element is attachable to the first component, and wherein each of the second connection portion of the first connection element and the second connection portion of the second connection element is attachable to the second component.

Optionally, each of the first and second connection elements comprises two or more members that connect the first and second connection portions of the respective connection element.

Optionally, one or both of the first and second connection elements comprises three or more members that connect the first and second connection portions of the respective connection element.

Optionally, the members of the first connection element terminate at points lying in a first plane, the members of the second connection element terminate at points lying in a second plane, and the first plane is parallel to the second plane.

Optionally, the members of the first connection element terminate at points lying in a first plane, wherein the members of the second connection element terminate at points lying in a second plane, and wherein the second connection portion of the first connection element lies in the second plane and/or the first connection portion of the second connection element lies in the first plane.

Optionally, the two or more members and the first and second connection portions of the first connection element define a perimeter of a plane, and at least one of the members of the second connection element intersects the plane.

Optionally, the first and second connection elements are out of contact with one another.

Optionally, the first and second connection elements have substantially the same geometric form.

Optionally, the first connection element has a different geometric form to the second connection element.

Optionally, each of the connection elements is a single-piece element.

Optionally, at least one of the first and second connection elements comprises a metallic material.

Optionally, the metallic material comprises one or more of titanium, a steel alloy, and aluminium Optionally, the first connection element comprises the same material as the second connection element.

Optionally, the first connection element and/or the second connection element is of a substantially homogeneous material.

Optionally, the first connection element and/or the second connection element has a structure that is at least partially triangulated.

Optionally, the first connection element and/or the second connection element has a structure that is fully triangulated.

Optionally, the first connection element and/or the second connection element comprises a tetrahedral structure.

Optionally, the first and second connection elements are inseparable without one or other of the first and second connection elements being broken.

Optionally, the first and second connection elements together occupy a volume that is less than a sum of a volume of the first connection element and a volume of the second connection element.

Optionally, the first connection element occupies at least part of a volume bounded by the second connection element.

A seventh aspect of the present invention provides a method of manufacturing an assembly according to the second aspect of the present invention, the method comprising:
forming a structural connector comprising a first connection element and a second connection element interlinked with the first connection element; and
attaching each of the first and second connection elements to each of the first and second components.

Optionally, the structural connector is formed in an additive manufacturing process.

Optionally, the additive manufacturing process comprises one or more of: a laser melting process, an electron beam melting process, a direct metal laser sintering process, a blown powder process, and a wire extrusion process.

Optionally, the method comprises a finishing process.

Optionally, the finishing process comprises one or more of a drilling process, a filing process, a sanding process, an abrasive polishing process, and a hot isostatic pressing (HIP) process.

### BRIEF DESCRIPTION OF THE DRAWINGS

Embodiments of the invention will now be described, by way of example only, with reference to the accompanying drawings, in which:
Figure 1 is a schematic diagram illustrating an example of a structural connector of an embodiment of the invention;
Figure 2 is a schematic diagram illustrating an example of a structural connector of another embodiment of the invention;
Figure 3 is a schematic diagram illustrating an example of a structural connector of a further embodiment of the invention;
Figure 4 is a schematic diagram illustrating an example of an assembly comprising a structural connector, in accordance with an embodiment of the invention;
Figure 5 is a schematic diagram illustrating an example of a manufacturing system for manufacturing a structural connector;
Figure 6 is a flow diagram illustrating an example of a method of manufacturing a structural connector of an embodiment of the invention; and
Figure 7 is a schematic diagram showing a side view of an example of an aircraft of an embodiment of the invention.

### DETAILED DESCRIPTION

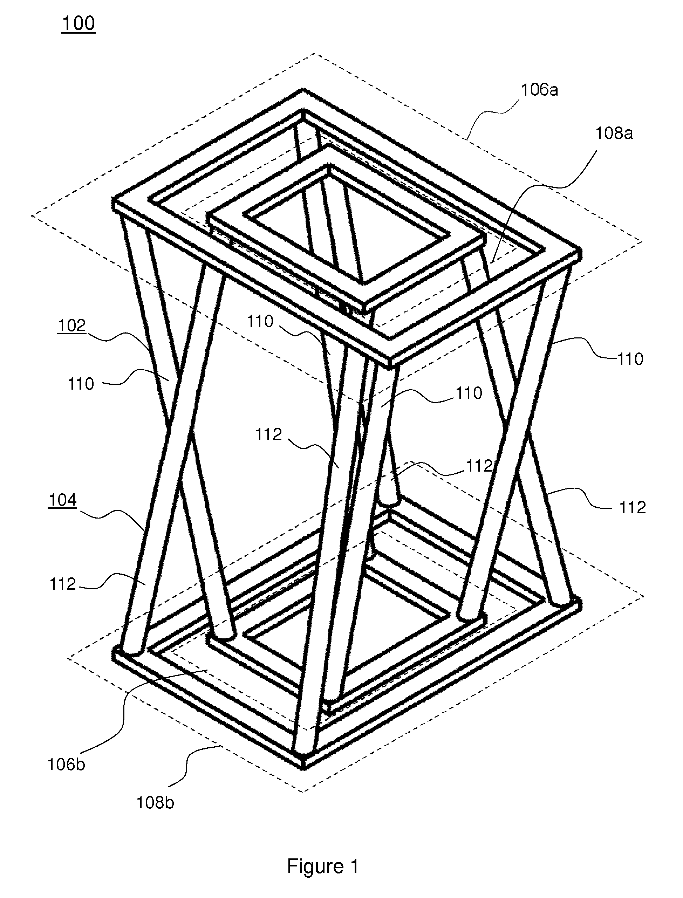

Figure 1 is a schematic diagram illustrating a structural connector 100 according to an example.

The structural connector 100 comprises a first connection element 102 and a second connection element 104. The first and second connection elements 102, 104 may be load bearing elements each arranged to support a required load. The first connection element 102 and the second connection element 104 are interlinked such that at least part of the first connection element 102 passes through, or intersects, at least part of the second connection element 104 and, conversely, at least part of the second connection element 104 passes through, or intersects, at least part of the first connection element 102. In this way, the first and second connection elements 102, 104 are coupled or linked together such that, once manufactured, the first and section connection elements 102, 104 are inseparable without breaking one or other of the connection elements 102, 104. The structural connector 100 may therefore be considered to be self-intersecting.

Providing first and second connection elements 102, 104 that are interlinked gives the structural connector 100 redundancy in the event that one or other of the connection elements 102, 104 fails or is removed without necessarily requiring significant addition space to accommodate an additional load bearing connection element. For example, the first and second connection elements 102, 104 may together occupy, or be bounded by, a volume that is less than a sum of a volume of the first connection element 102 and a volume of the second connection element 104. The first connection element 102 may occupy at least part of the volume occupied by the second connection element 104 and the second connection element 104 may occupy at least part of the volume occupied by the first connection element 102.

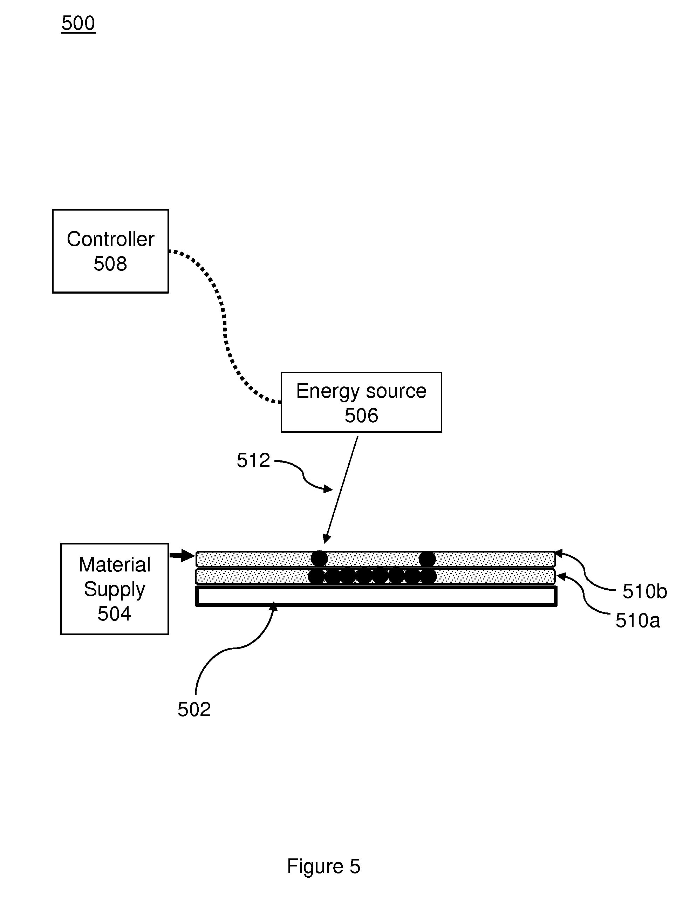

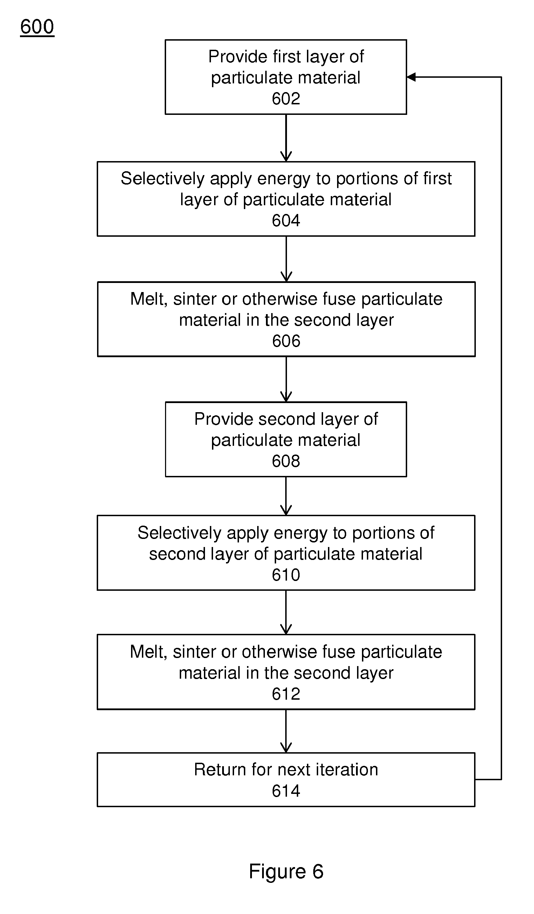

The first and second connection elements 102, 104 may be manufactured using an additive manufacturing process, as described below with reference to Figures 5 and 6. An additive manufacturing process facilitates manufacture of the first and second connection elements 102, 104 such that they are interlinked without requiring manufacturing steps to join sub-elements of the first and second connection elements 102, 104 that may otherwise be necessary if using a non-additive manufacturing process.

The first and section connection elements 102, 104 may be interlinked without the first connection element 102 being in contact with, or integrally formed with, the second connection element 104. Each of the first and second connection elements 102, 104 may be a unitary, or single-piece component. Providing first and second connection elements 102, 104 that are not in contact mitigates the risk of any corrosion or fatigue paths spreading from the first connection element 102 to the second connection element 104 or vice versa.

The first connection element 102 comprises a first connection portion 106a and a second connection portion 106b. Similarly, the second connection element 104 comprises a first connection portion 108a and a second connection portion 108b. In this embodiment, the first and second connection portions 106a, 106b, of the first connection element 102 are coupled together, or linked, by four members 110, which in use may act to bear a load. Similarly, in this embodiment, the first and second connection portions 108a, 108b of the second connection element 104 are coupled together, or linked, by four members 112. In some embodiments, one or each of the first and second connection elements 102, 104 may comprise fewer than, or more than, four members 110, 112. In some embodiments, one or each of the first and second connection elements 102, 104 comprises two or more members 110, 112. In some embodiments, one or both of the first and second connection elements comprises three or more members 110, 112 that connect the first and second connection portions of the respective connection element.

The members of the first connection element may terminate at points lying in a first plane, the members of the second connection element may terminate at points lying in a second plane, and the first plane may be parallel to the second plane. The second connection portion of the first connection element may lie in the second plane and/or the first connection portion of the second connection element may lie in the first plane.

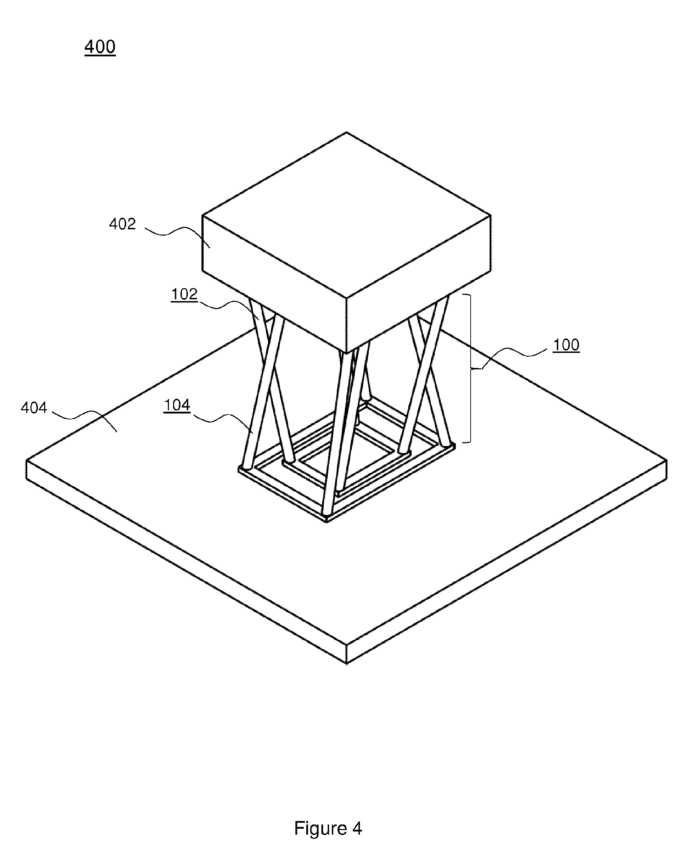

The first connection portion 106a of the first connection element 102 and the first connection portion 108a of the second connection element 104 are attachable to a first component, as described below with reference to Figure 4. Similarly, the second connection portion 106b of the first connection element 102 and the second connection portion 108b of the second connection element 104 are attachable to a second component, as described below with reference to Figure 4.

In this embodiment, the first and second connection portions 106a, 106b of the first connection element 102, and the first and second connection portions 108a, 108b of the second connection element 104, are each substantially rectangular and each comprise four elongate elements. However, it will be understood that the configuration of the connection portions 106a, 106b, 108a, 108b are not limited to the configurations described with reference to Figure 1 and may take any suitable form.

For each connection element 102, 104, the two or more load bearing members 110, 112 in combination with the first and second connection portions 106a, 106b, 108a, 108b define a plane through which one or more of the load bearing members of the other connection element 104, 102 of the structural connector 100 pass, so as to interlink the first connection element 102 with the second connection element 104.

In the example shown in Figure 1, the first connection portion 106a of the first connection element 102 is connected to the second connection portion 106b of the first connection element 102 by four continuous struts that act as the members 110. Similarly, the first connection portion 108a of the second connection element 104 is connected to the second connection portion 108b of the second connection element 104 by four continuous struts that act as the members 112.

The struts 110 of the first connection element 102 in combination with the first and second connection portions 106a, 106b of the first connection element 102 define four trapezoidal planes. Similarly, the struts 112 of the second connection element 104 in combination with the first and second connection portions 108a, 108b of the second connection element 104 define four trapezoidal planes. For the first connection element 102, two of the trapezoidal planes are each intersected by two of the struts 112 of the second connection element 104. For the second connection element 104, two of the trapezoidal planes are each intersected by two of the struts 110 of the first connection element 102. In this way the first connection element 102 is interlinked with the second connection element 104. In this embodiment, for each of the first and second connection elements 102, 104, the planes that are intersected by struts of the other connection element 104, 102 are opposite each other.

Although in the example described with reference to Figure 1 each of the connection elements 102, 104 comprises four members 110, 112, it will be understood that, in other examples, the connection elements may have other numbers of members. In some examples the first connection element 102 may have the same number of members as the second connection element 104, or the first connection element 102 may have a different number of members as the second connection element 104.

The first connection element 102 and/or the second connection 104 element may have a structure that is at least partially triangulated or that is fully triangulated. For example, the first connection element 102 and/or the second connection element 104 may comprise at least a portion which has a tetrahedral structure.

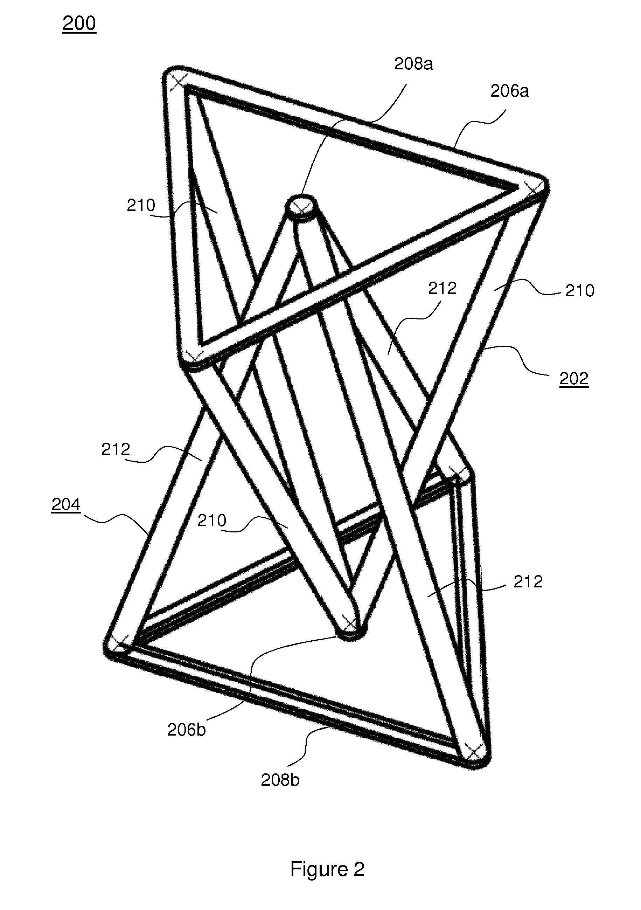

Figure 2 is a schematic diagram illustrating a structural connector 200 of another embodiment. In this embodiment, the structural connector 200 has a triangulated structure. The structural connector 200 comprises a first connection element 202 and a second connection element 204 interlinked with the first connection element 202. Each of the first and second connection elements 202, 204 is pyramidal. in shape.

The first connection element 202 comprises a first connection portion 206a and a second connection portion 206b. Similarly, the second connection element 204 comprises a first connection portion 208a and a second connection portion 208b. The first connection portion 206a of the first connection element 202, and the second connection portion 208b of the second connection element 204, are each triangular and each comprise three elongate elements. The first connection portion 206a of the first connection element 202 is connected to the second connection portion 206b of the first connection element 202 by three continuous struts, or members, 210. Similarly, the first connection portion 208a of the second connection element 204 is connected to the second connection portion 208b of the second connection element 204 by three continuous struts, or members, 212. The first connection portion 208a of the second connection element 204, and the second connection portion 206b of the first connection element 202, are each formed at the points of intersection of the struts of the respective connection elements 204, 202. However, it will be understood that in some examples the first connection portion 208a of the second connection element 204 and the second connection portion 206b of the first connection element 202 could instead be triangular connection portions formed similarly to the first connection portion 206a of the first connection element 202 and the second connection portion 208b of the second connection element 204 but occupying, or bounding, respective smaller areas.

The struts 210 of the first connection element 202 in combination with the first and second connection portions 206a, 206b of the first connection element 202 define three triangular planes. Similarly, the struts 212 of the second connection element 204 in combination with the first and second connection portions 208a, 208b of the second connection element 204 define three triangular planes. For the first connection element 202, each of the triangular planes is intersected by one of the struts 212 of the second connection element 204. For the second connection element 204, each of the triangular planes is intersected by one of the struts 210 of the first connection element 202. In this way the first connection element 202 is interlinked with the second connection element 204.

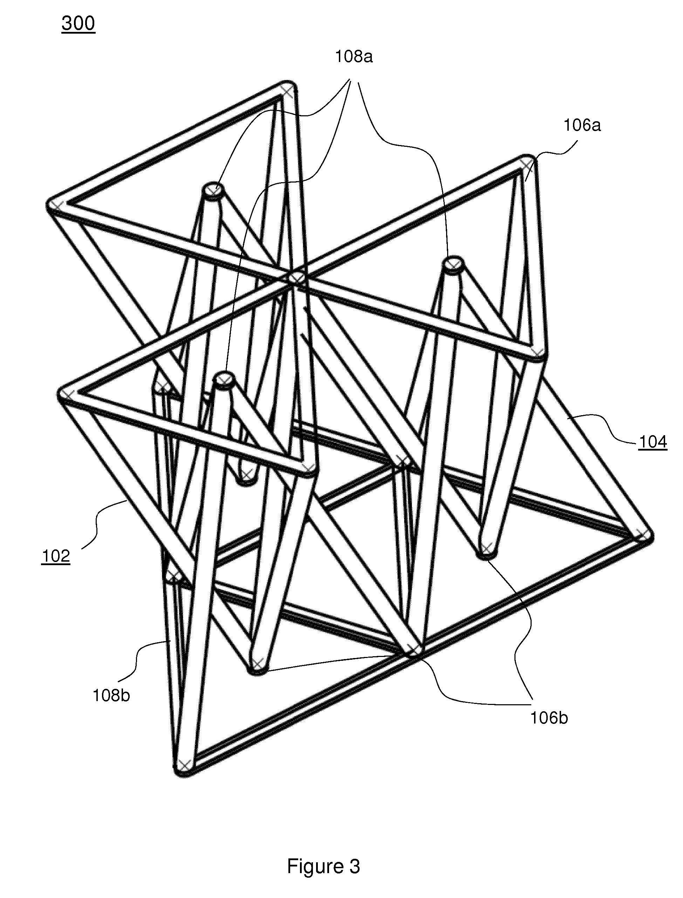

Figure 3 is a schematic diagram illustrating a further example of a structural connector 300 having a triangulated structure. The structural connector 300 comprises a first connection element 302 and a second connection element 304 interlinked with the first connection element 302.

The first connection element 302 comprises three pyramidal sub-elements, each of which has a similar form to the connection elements shown in Figure 2. The sub elements are connected at a single point to form an array of pyramidal sub-elements. Similarly, the second connection element 304 comprises an array of pyramidal sub-elements. Arranging the pyramidal sub-elements in an array provides multiple points of contact at which the connection elements 302, 304 may be connected to components to be connected by the structural connector 300. This improves the ability of the connection elements 302, 304 to resist moments of forces. As with the connection elements 202, 204 of Figure 2, the connection elements 302, 304 shown in Figure 3 may instead include triangular connection portions at both ends.

The connection elements described above may be formed of any suitable material. In some examples, the connection elements may comprise a metallic material. For example, the connection elements may comprise one or more of titanium, a steel alloy, and aluminium.

In some examples, the first connection element comprises the same material as the second connection element. Alternatively, the first connection element may comprise different material to the second connection element. In some examples, the material from which the first and/or second connection element is made is substantially homogeneous.

In the examples shown in Figures 1, 2 and 3, the structural connectors 100, 200, 300 comprise two connection elements. However, in some examples the structural connector may comprise more than two connection elements.

In each of the examples shown in Figures 1, 2, and 3, the first and second connection elements have substantially the same size and geometric form. This may provide that each of the connection elements has substantially the same load bearing capacity, which in turn may facilitate more predictable behaviour of the structural connector 100, 200, 300.

However, in some other examples, the first connection element may have a different size or geometric form to the second connection element. For example, the first connection element may be arranged to have a higher load bearing capacity than the second connection element. The first connection element may bear the majority, or all, of the load in normal use and therefore undergo the majority of fatigue during loading and unloading of the structural connector, leaving the second connection element in a better condition to take the load in the event of failure or removal of the first connection element.

Figure 4 is a schematic diagram showing an assembly 400 comprising a first component 402 and a second component 404. The first component 402 is connected to the second component 404 via the structural connector 100 described above with reference to Figure 1. However, in other examples, the first component 402 may be connected to the second component 404 via other structural connectors embodying the invention, such as the structural connector 200 shown in Figure 2 or the structural connector 300 shown in Figure 3. Each of the first and second connection elements is attached to each of the first and second components. In this example, the first component 402 is orientated substantially parallel to the second component 404. In other examples, the first component 402 may be oriented non-parallel to the second component 404.

As can be appreciated from Figure 4, the first connection portion 106a of the first connection element 102 occupies a first surface space of the first component 402 and the first connection portion 108a of the second connection element 104 occupies a second surface space of the first component 402. The second surface space (that is, the space occupied by the first connection portion 108a of the second connection element 104) has an area that is less than the area of the first surface space (that is, the space occupied by the first connection portion 106a of the first connection element 102).

Similarly, the second connection portion 106b of the first connection element 102 occupies a third surface space of the second component 404 and the second connection portion 108b of the second connection element 104 occupies a fourth surface space of the second component 404. The third surface space (that is, the space occupied by the second connection portion 106b of the first connection element 102) has an area that is less than the area of fourth surface space (that is, the space occupied by the second connection portion 108b of the second connection element 104).

The area of the first surface space may be substantially equal to the area of fourth surface space. The area of the second surface space may be substantially equal to the area of the third surface space.

The second surface space occupied by the first connection portion 108a of the second connection element 104 may be at least partially within the first surface space occupied by the first connection portion 106a of the first connection element 102. Similarly, the third surface space occupied by the second connection portion 106b of the first connection element 102 may be at least partially within the fourth surface space occupied by the second connection portion 108b of the second connection element 104.

Arranging the first and second connection elements 102, 104 such that a connection portion of one connection element occupies a space that is at least partially within a space occupied by a connection portion of the other connection element facilitates one connection element providing redundancy for the other connection element while helping to reduce the spaces on the components 402, 404 occupied by the two connection elements.

In the example shown in Figure 4, the second surface space occupied by the first connection portion 108a of the second connection element 104 is entirely within the first surface space occupied by the first connection portion 106a of the first connection element 102. Similarly, in the example shown in Figure 4, the third surface space occupied by the second connection portion 106b of the first connection element 102 is entirely within the fourth surface space occupied by the second connection portion 108b of the second connection element 104.

Arranging the first and second connection elements 102, 104 such that a connection portion of one element occupies a space that is entirely within a space occupied by a connection portion of the other connection element facilitates one connection element providing redundancy for the other connection element without utilising significantly more space on the components 402, 404 than the other connection element used alone. It also utilises less than the sum of the separate spaces that the two connection elements would occupy were they not so arranged.

In some examples, the area occupied by the first connection portion 106a of the first connection element 102 is substantially equal to the area occupied by the second connection portion 108b of the second connection element 104. In some examples, the area occupied by the first connection portion 108a of the second connection element 104 is substantially equal to the area occupied by the second connection portion 106b of the first connection element 102. In other examples, the area occupied by the first connection portion 106a of the first connection element 102 may be unequal to the area occupied by the second connection portion 108b of the second connection element 104 and/or the area occupied by the first connection portion 108a of the second connection element 104 may be unequal to the area occupied by the second connection portion 106b of the first connection element 102.

The first and second connection elements 102, 104 may be bolted, riveted, glued, welded or otherwise attached to the first and second components 402, 404 at the connection portions 106a, 106b, 108a, 108b. It will be appreciated that the first and second connection elements 102, 104 may be attached to the first and second components 402, 404 by another suitable fastening. Furthermore, combinations of fastenings, or attachments, may be used to attach the first and/or second connection element 102, 104 to the first and/or second component 402, 404. In some examples, one of the components 402, 404 may provide a base on which the first and second connection elements 102, 104 are formed in an additive manufacturing process. For example, a powdered material may be deposited on the first component 402 and the first and second connection elements 102, 104 may be formed or 'grown' by melting, sintering or fusion of the powdered material, as described below with reference to Figures 5 and 6. The second component 404 may then be attached to the first and second connection elements 102, 104 by a fastening, or attachment, as described above, or may be formed by a continuation of the additive manufacturing process.

In use, one or other of the first and second components 402, 404 of the assembly 400 may support a load generated by the other of the first and second components 404, 402 via the structural connector 100. For example, the load of the second component 404 may be transmitted via the connection portions 106a, 106b and the members 110 of the first connection element 102 and the connection portions 108a, 108b, and the members 112 of the second connection element 104, to the first component 402.

In some examples, the assembly 400 may include a further component (not shown) connected to one or other of the first and second components 402, 404 of the assembly 400 via a further structural connector 100. For example, the assembly 400 may include a third component and third and fourth interlinked connection elements, wherein each of the third and fourth connection elements is attached to each of the second and third components.

The first and second components 402, 404 may be components of a vehicle such as an aircraft. For example, the first and second components 402, 404 may be components of an aircraft wing. In one example, the first component 402 may be a wing component, such as a wing spar, and the second component 404 may be a wiring harness. In another example, the first component 402 may be a hinge rib and the second component 404 may be an actuator. In another example, the first component 402 may be a component of the wing spar or a wing rib and the second component 404 may be a hinge associated with a control surface of the aircraft.

In the example shown in Figure 4, the first component 402 is connected to the second component 404 via a structural connector 100 comprising two connection elements: a first connection element 106a and a second connection element 106b. However, as noted above in relation to Figure 1, in some examples the first component 402 may be connected to the second component 404 via a structural connector 100 comprising more than two connection elements.

Furthermore, although in the example described with reference to Figure 4 the structural connector 100 is used to connect together only two components 402, 404, in some examples the structural connector may connect together more than two components. In some such examples, the connection elements may each include more than two connection portions.

Figure 5 is a schematic diagram showing an apparatus 500 which may be used for manufacturing a structural connector, such as one of the structural connectors 100, 200, 300 described above with reference to Figures 1, 2 and 3.

The apparatus 500 is an "additive manufacturing" apparatus, or "additive layer manufacturing" apparatus. In particular, the apparatus 500 is a so-called "powder bed" apparatus and comprises a build platform 502, a material supply apparatus 504, an energy source 506, and a processor (referred to hereinafter as a controller) 508.

The build platform 502 may comprise a platen upon which a three-dimensional object, such as a structural connector, may be constructed.

The material supply apparatus 504 is an apparatus to dispense, deposit, or otherwise supply materials for generating the structural connector. In this example, the material supply apparatus 504 comprises a powdered substrate supply mechanism to supply successive layers of powdered substrate 510. Two layers are shown in Figure 5: a first layer 510a onto which a second layer 510b has been deposited by the material supply apparatus 504. In certain cases, the material supply apparatus may be arranged to move relative to the build platform 502 so that successive layers of material may be deposited on top of each other.

The energy source 506 may be any energy source that is arranged to direct or otherwise selectively supply energy 512 to the material deposited on the build platform 502.

The controller 508 may be communicatively coupled to the energy source 506, e.g. via a wired interface and/or via a wireless interface. The controller 508 may be programmed to control the application or supply of energy from the energy source 506 based on manufacturing control data. The manufacturing control data may indicate placement instructions for the energy. For example, these instructions may comprise signals indicating an intensity and/or a direction at which energy should be emitted by the energy source 506. These signals may be associated with a particular location in two or three dimensional space.

The energy source 506 may be moveable relative to the build platform 502 in order to selectively apply or supply energy to a particular location. The three-dimensional structural connector may be constructed layer-by-layer, in which case the energy source 506 may selectively apply energy onto each layer. In this case, placement instructions may relate to the placement of a beam of radiation or other energetic beam at a particular print-resolution pixel for a particular layer (e.g. to fuse material to form a voxel associated with the layer).

The energy source may, for example, be an electron beam in the case of an Electron Beam Melting (EBM) apparatus. Alternatively, the energy source may be a laser beam, for example in the case of a Direct Metal Laser Sintering (DLMS) apparatus.

Figure 6 is a flow diagram illustrating a method 600 by which a structural connector may be manufactured.

At block 602, a first layer of particulate material is provided. The first layer of particulate material may be the first layer 510a of powdered substrate as shown in Figure 5. The particulate material may be chosen for its suitability as a material for supporting loads that are to be supported by a structural connector.

The layer of particulate material may, in some examples, be between 60 and 300 microns thick. In some examples, the layer of particulate material may be made uniformly, or substantially uniformly, thick using a roller. In other examples, the layer of particulate material may be made uniformly, or substantially uniformly, thick using a wiper.

At block 604, energy is selectively applied to portions the first layer 510a of particulate material to form a first layer of the structural connector. For example, energy may be applied by the energy source 506.

At block 606, the particulate material of the first layer 510a may absorb the energy emitted, for example, by the energy source 506. In absorbing the energy, the temperature of the material may increase such that it reaches a temperature sufficient for the particulate material to melt, sinter or otherwise fuse together.

At block 608, a second layer of particulate material is provided. The first layer of particulate material may be the first layer 510b of powdered substrate as shown in Figure 5. The particulate material of the second layer 510b may be the same material as that of the first layer 510a, for example.

At block 610, energy is selectively applied to portions the second layer 510b of particulate material to form a second layer of the structural connector. For example, energy may be applied by the energy source 506.

At block 612, the particulate material of the second layer 510b may absorb the energy emitted, for example, by the energy source 506. In absorbing the energy, the temperature of the material may increase such that it reaches a temperature sufficient for the particulate material to melt, sinter or otherwise fuse together. Furthermore, material in the second layer 510b may melt, sinter or otherwise fuse to the material of the first layer 510a.

At block 614, the method 600 may return to block 602 and a further layer of particulate material may be provided over the second layer 510b and energy may be selectively applied to the further layer to form a further layer of the structural connector. The method may continue for plural iterations. In each iteration, energy may be selectively applied in a pattern determined so as to define all layers of the three-dimensional structural connector.

Upon completion of the formation of the structural connector, in some examples, one or more finishing processes may be performed on the structural connector. For example, the structural connector may be drilled, filed, and/or sanded to prepare the structural connector for assembly to the components 402, 404. In some examples, an abrasive polishing process may be applied to the structural connector to remove burrs, sharp edges, and/or other surface imperfections or irregularities resulting from the manufacturing process. In some examples the structural connector 100 may be subjected to a Hot Isostatic Pressing (HIP) process to remove residual microcracks that could initiate fatigue.

Upon completion of the formation of the structural connector, the first and second connection elements of the structural connector may each be attached to each of the first and second components to form the assembly.

Although the method 600 described above with reference to Figure 6 relates to a powder bed process, it will be understood that structural connectors may be manufactured using any suitable additive manufacturing process. For example, the process may include one or more of: a laser melting process, an electron beam melting process, a direct metal laser sintering process, a blown powder process, and a wire extrusion process, or the like.

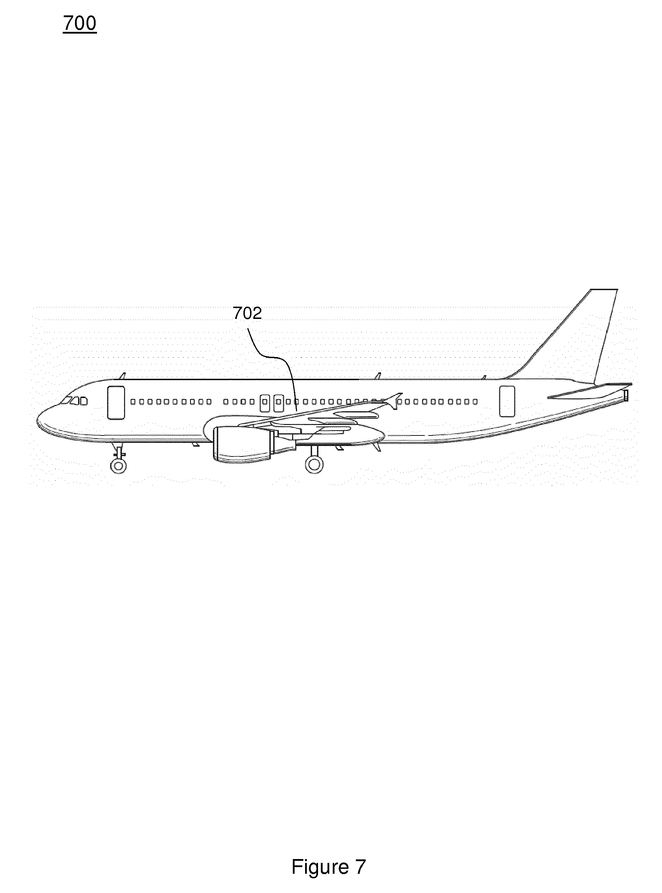

Referring to Figure 7, there is shown a schematic side view of an example of a vehicle according to an embodiment of the invention. In the example of Figure 7, the vehicle is an aircraft 700. The aircraft 700 may comprise one or more assemblies as described above, such as the assembly 400 described with reference to Figure 4. The, or each, assembly may comprise a structural connector as described above with reference to one of Figures 1, 2, and 3. Furthermore, the aircraft 700 comprises a wing 702 and the wing 702 may one or more assemblies as described above, such as the assembly 400 described with reference to Figure 4. The, or each, assembly may comprise a structural connector as described above with reference to one of Figures 1, 2, and 3.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An assembly comprising first and second components and a structural connector, the structural connector comprising a first connection element and a second connection element interlinked with the first connection element, wherein each of the first and second connection elements is attached to each of the first and second components.

2. The assembly according to claim 1, wherein each of the connection elements is a single-piece element.

3. The assembly according to claim 1 or claim 2, wherein a first connection portion of the first connection element occupies a first surface area of the first component and a first connection portion of the second connection element occupies a second surface area of the first component, the second surface area being less than the first surface area;
optionally wherein a second connection portion of the first connection element occupies a third surface area of the second component and a second connection portion of the second connection element occupies a fourth surface area of the second component, the third surface area being less than the fourth surface area.

4. The assembly according to claim 3, wherein the first surface area is substantially equal to the fourth surface area and/or wherein the second surface area is substantially equal to the third surface area.

5. The assembly according to claim 3 or claim 4, wherein the second surface area is at least partially within the first surface area and/or wherein the third surface area is at least partially within the fourth surface area.

6. The assembly according to any one of claims 1 to 5, wherein one or both of the first and second connection elements are attached to one or both of the first and second components by a fastening;
optionally wherein the fastening includes one or more of a bolt, a rivet, an adhesive and a weld.

7. The assembly according to any one of claims 1 to 6, wherein the second component is supported by the first component via the first and second connection elements, such that the first connection element provides a load path redundancy for the second connection element.

8. The assembly according to any one of claims 1 to 7, wherein the first and second components are components of a vehicle;
optionally wherein the first and second components are components of an aircraft;
optionally wherein the first and second components are components of an aircraft wing.

9. The assembly according to claim 8, wherein the first component is a wing component and the second component is a wiring harness; and/or
wherein the first component is a hinge rib and the second component is an actuator,
optionally wherein the first component is a portion of the wing spar or wing rib and the second component is a hinge associated with a control surface of the aircraft.

10. A vehicle, aircraft, or aircraft wing comprising the assembly according to any one of claims 1 to 9.

11. A structural connector for connecting first and second components, the structural connector comprising a first connection element and a second connection element interlinked with the first connection element, wherein each of the first and second connection elements is attachable to each of the first and second components.

12. The structural connector according to claim 11, wherein each of the first and second connection elements comprises a first connection portion and a second connection portion, wherein each of the first connection portion of the first connection element and the first connection portion of the second connection element is attachable to the first component, and wherein each of the second connection portion of the first connection element and the second connection portion of the second connection element is attachable to the second component.

13. The structural connector according to claim 12, wherein each of the first and second connection elements comprises two or more members that connect the first and second connection portions of the respective connection element;
optionally wherein one or both of the first and second connection elements comprises three or more members that connect the first and second connection portions of the respective connection element; and/or
wherein the members of the first connection element terminate at points lying in a first plane, the members of the second connection element terminate at points lying in a second plane, and the first plane is parallel to the second plane; and/or
wherein the members of the first connection element terminate at points lying in a first plane, wherein the members of the second connection element terminate at points lying in a second plane, and wherein the second connection portion of the first connection element lies in the second plane and/or the first connection portion of the second connection element lies in the first plane; and/or
wherein the two or more members and the first and second connection portions of the first connection element define a perimeter of a plane, and at least one of the members of the second connection element intersects the plane.

14. The structural connector according to any one of claims 11 to 13, wherein the first and second connection elements are out of contact with one another; and/or
wherein the first and second connection elements have substantially the same geometric form; and/or
wherein the first connection element has a different geometric form to the second connection element.

15. The structural connector according to any one of claims 11 to 14, wherein each of the connection elements is a single-piece element.

16. The structural connector according to any one of claims 11 to 15, wherein at least one of the first and second connection elements comprises a metallic material; and/or
wherein the first connection element comprises the same material as the second connection element; and/or
wherein the first connection element and/or the second connection element is of a substantially homogeneous material.

17. The structural connector according to any one of claims 11 to 16, wherein the first connection element and/or the second connection element has a structure that is at least partially triangulated;
optionally wherein the first connection element and/or the second connection element comprises a tetrahedral structure.

18. The structural connector according to any one of claims 11 to 17, wherein the first and second connection elements are inseparable without one or other of the first and second connection elements being broken; and/or
wherein the first and second connection elements together occupy a volume that is less than a sum of a volume of the first connection element and a volume of the second connection element; and/or
wherein the first connection element occupies at least part of a volume bounded by the second connection element.

19. A method of manufacturing the assembly according to any one of claims 1 to 9, the method comprising:
forming the structural connector comprising the first connection element and the second connection element interlinked with the first connection element; and
attaching each of the first and second connection elements to each of the first and second components.

20. The method according to claim 19, wherein the structural connector is formed in an additive manufacturing process;
optionally wherein the additive manufacturing process comprises one or more of: a laser melting process, an electron beam melting process, a direct metal laser sintering process, a blown powder process, and a wire extrusion process; and/or
wherein the method comprises a finishing process;
optionally wherein the finishing process comprises one or more of a drilling process, a filing process, a sanding process, an abrasive polishing process, and a hot isostatic pressing (HIP) process.
